# EUROPEAN PATENT APPLICATION

(11) **EP 3 705 357 A1**
(43) Date of publication of application: **09.09.2020**
(21) Application number: 18873156.6
(22) Date of filing: 25.04.2018
(51) Int. Cl.: B60S 5/06

(54) **AUTOMATIC BATTERY SWAP STATION FOR ELECTRIC VEHICLE**

(30) Priority: 03.11.2017 CN 201711071227
(71) Applicant: Nio Nextev Limited, Central, Hong Kong (CN)
(72) Inventor: BENGTSSON, Jan, Shanghai 201804 (CN); MA, Yongyue, Shanghai 201804 (CN); TIAN, Xiaotao, Shanghai 201804 (CN); DING, Xikun, Shanghai 201804 (CN); LI, Nan, Shanghai 201804 (CN)
(74) Representative: Vossius & Partner Patentanwälte Rechtsanwälte mbB
(86) International application number: PCT/CN2018/084438
(87) International publication number: WO 2019/085415

(57) **Abstract**

The present invention provides an automatic battery swap station of an electric vehicle, including: a battery replacement platform (1) for supporting and locating the vehicle and lifting the vehicle to a preset battery replacement height; a guide rail (2) passing through the battery replacement platform (1) and extending out from the battery replacement platform (1) at both ends, wherein the guide rail (2) is used as a walking track of a battery replacement trolley (4); and battery pack storage devices (3), arranged at the both ends of the battery replacement platform (1) where the guide rail (2) extends out respectively, and used for storing battery packs, receiving power-lost battery packs conveyed by the battery replacement trolley (4) and providing fully-charged battery packs for the battery replacement trolley (4), wherein the battery pack storage device (3) is provided with an avoidance area (5) at the bottom for enabling the guide rail (2) and the battery replacement trolley (4) to enter and is provided with multiple layers of battery pack storage units (6) arranged along a height direction on the avoidance area (5). The automatic battery swap station includes multiple battery pack exchange ports, has a small occupation space, a large number of stored battery packs, a short battery pack exchange time and high battery replacement efficiency, and greatly improves the user experience.

## Description

### Field of the Invention

The present invention relates to the technical field of battery replacement of electric vehicles, and in particular to an automatic battery swap station of an electric vehicle.

### Background of the Invention

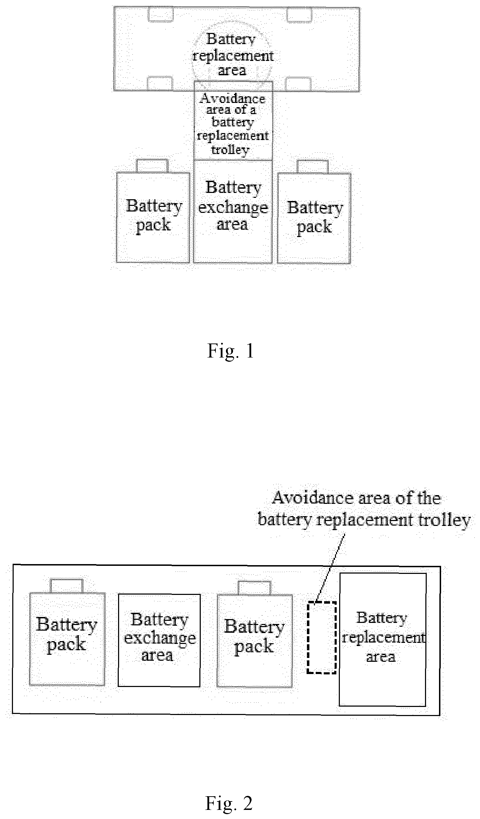

With the development of charging and battery replacement facilities of electric vehicles, more and more vehicle owners choose to use automatic battery swap stations to supplement electric energy for the electric vehicles. An automatic battery swap station designed by the applicant before the present invention is shown in Fig. 1 and Fig. 2, in the automatic battery swap station shown in Fig. 1, the difference between the orientation of a battery pack in a battery pack storage area and the orientation of the battery pack in a battery replacement area is 90 degrees, the battery pack needs to be rotated 90 degrees in the whole process, so that the cost is high, the battery replacement time is long, and the system complexity is high. In the battery replacement process, it is necessary to set an avoidance space for a battery replacement trolley, when the floor space is three parking spaces, the automatic battery swap station can store 5 battery packs at most, so that the number of stored battery packs is small. Furthermore, there is only one layer of batteries in a battery pack exchange position, and every time the battery packs are exchanged, the battery packs need to be picked up from a long distance, which takes a long time and leads to low battery replacement efficiency.

In the automatic battery swap station shown in Fig. 2, the storage orientation of the battery pack is the same as the replacement orientation in the solution, the battery pack no longer needs to be rotated 90 degrees in the battery replacement process, but it is still necessary to set the avoidance space for the battery replacement trolley, such that the space occupied by the battery swap station exceeds the width of the three parking spaces, and there is no margin for the surrounding space. In addition, there is only one layer of battery pack exchange position, and every time the battery packs are exchanged, the battery packs need to be picked up from a long distance, which takes a long time and leads to low battery replacement efficiency.

In addition, the above-mentioned automatic battery swap station usually requires the battery replacement trolley to be able to ascend and descend between various battery storage positions along the height direction of the battery replacement position, so as to place or remove the battery pack. Therefore, on one hand, a complicated lifting mechanism needs to be arranged on the battery replacement trolley to meet the lifting requirements, and on the other hand, the battery replacement time is longer, and the battery replacement efficiency is lower.

It can be seen that the existing automatic battery swap stations at least have the following shortcomings: large space occupation, a large number of stored battery packs, just one battery exchange port, numerous motion adjustment mechanisms, long battery pack exchange time, complex battery replacement process, low battery replacement efficiency and poor user experience.

### Summary of the Invention

The technical problem to be solved by the present invention is to provide an automatic battery swap station of an electric vehicle. The automatic battery swap station includes multiple battery pack exchange ports, has a small occupation space, a small number of stored battery packs, a short battery pack exchange time and high battery replacement efficiency, can be widely applicable to a variety of occasions, and greatly improves the user experience.

In order to solve the above technical problem, the present invention provides an automatic battery swap station of an electric vehicle, including:
a battery replacement platform for supporting and locating the vehicle and lifting the vehicle to a preset battery replacement height;
a guide rail passing through the battery replacement platform and extending out from the battery replacement platform at both ends, wherein the guide rail is used as a walking track of a battery replacement trolley; and
battery pack storage devices, arranged at the both ends of the battery replacement platform where the guide rail extends out respectively, and used for storing battery packs, receiving power-lost battery packs conveyed by the battery replacement trolley and providing fully-charged battery packs for the battery replacement trolley, wherein the battery pack storage device is provided with an avoidance area at the bottom for enabling the guide rail and the battery replacement trolley to enter and is provided with multiple layers of battery pack storage units arranged along a height direction on the avoidance area.

Further, the height of the avoidance area is configured to enable the battery replacement trolley to maintain a height required for battery exchange with the vehicle in the avoidance area.

Further, two battery replacement trolleys are provided, wherein one is used for receiving the power-lost battery pack removed from the vehicle, and other is used for providing the fully-charged battery pack.

Further, the battery pack storage unit is provided with a conveying part, which is capable of conveying the battery pack along the extension direction of the guide rail and is used for exchanging the battery pack with the battery replacement trolley.

Further, not less than three layers of battery pack storage units are arranged on the battery pack storage device.

Further, the battery replacement trolley includes a lifting mechanism for driving the battery replacement trolley to ascend and descend along the height direction.

Further, the lifting mechanism can ascend and descend between a lowest position and a first height along the lifting direction, and the first height is a first height at which the battery can be exchanged with the vehicle.

Further, the lifting mechanism can ascend and descend between the first height and a second height along the lifting direction, the first height is a first height at which the battery can be exchanged with the vehicle, and the second height is a second height at which the battery can be exchanged with the battery pack storage unit.

Further, the battery replacement platform includes a platform main body and a lifting mechanism, wherein the platform main body is used for supporting and locating the vehicle; and the lifting mechanism is arranged on the platform main body for lifting the vehicle to the height required for battery replacement with the battery replacement trolley.

Further, the automatic battery swap station further includes a charging device for charging the power-lost battery pack.

Further, the automatic battery swap station further includes a control device for sending instructions to the battery replacement platform, the battery replacement trolley and the battery pack storage units to coordinate and control the work of the components.

Compared with the prior art, the present invention has obvious advantages and beneficial effects. By means of the above technical solutions, the automatic battery swap station of the electric vehicle in the present invention can achieve considerable technological advancement and practicality, has wide industrial use values, and at least has the following advantages:
(1) the orientation of the battery pack in the battery pack storage area is the same as that of the battery pack in the battery replacement area, so the battery pack does not need to be rotated in the battery replacement process, thereby shortening the battery replacement time and reducing the battery replacement space;
(2) the battery replacement trolley can be placed in the battery pack storage area, so no additional avoidance position of the battery replacement trolley needs to be set, thereby further saving the space;
(3) the battery pack storage devices are arranged in layers, so multiple battery packs can be stored, and the number of stored battery packs is increased, and furthermore, the battery pack storage device has multiple battery exchange ports, so the flow is simple;
(4) by lifting and lowering the battery replacement trolley and adjusting the battery pack storage position in the battery pack storage device, a battery replacement area is used as a battery exchange area at the same time, thereby further saving the floor space and reducing the cost;
(5) the battery swap station is suitable for the requirements of various parking lots and most vehicle repair stations, and can be widely used in various occasions; and
(6) all processes of automatic battery replacement can be completed automatically by the control device, and no manual battery replacement is needed, thereby saving manpower, ensuring a simple battery replacement process and easy operation, improving the battery replacement efficiency and improving the user experience.

The above description is only an overview of the technical solutions of the present invention. In order to understand the technical means of the present invention more clearly, the present invention can be implemented in accordance with the contents of the specification, and in order to make the above and other objects, features and advantages of the present invention more obvious and understandable, preferred embodiments are listed below and are descried in detail below in combination with drawings.

### Brief Description of the Drawings

Fig. 1 is a schematic diagram of a layout of an automatic battery swap station of an electric vehicle in the prior art;
Fig. 2 is a schematic diagram of a layout of another automatic battery swap station of an electric vehicle in the prior art.
Fig. 3 is a schematic diagram of a layout of an automatic battery swap station of an electric vehicle provided by an embodiment of the present invention;
Fig. 4 is a schematic diagram of a main body frame of an automatic battery swap station of an electric vehicle provided by an embodiment of the present invention;
Fig. 5 is a schematic diagram of a battery replacement process of an automatic battery swap station of an electric vehicle provided by an embodiment of the present invention.
Fig. 6 is a front view of the example shown in Fig. 5.
Fig. 7 is a side view of the example shown in Fig. 5.
Fig. 8 is a top view of the example shown in Fig. 5.
Fig. 9 is a flow diagram of an automatic battery replacement method of an electric vehicle provided by an embodiment of the present invention.

**Reference Signs:**

| | |
|---|---|
| 1: battery replacement platform | 2: guide rail |
| 3: battery pack storage device | 4:battery replacement trolley |
| 5: avoidance area | 6: battery pack storage unit |
| 7: charging device | 11: control device |

### Detailed Description of the Embodiments

In order to further illustrate the technical means and effects adopted in the present invention to achieve the intended purpose of the invention, specific embodiments and effects of an automatic battery swap station of an electric vehicle proposed in accordance with the present invention are described in detail below, in conjunction with the drawings and preferred embodiments.

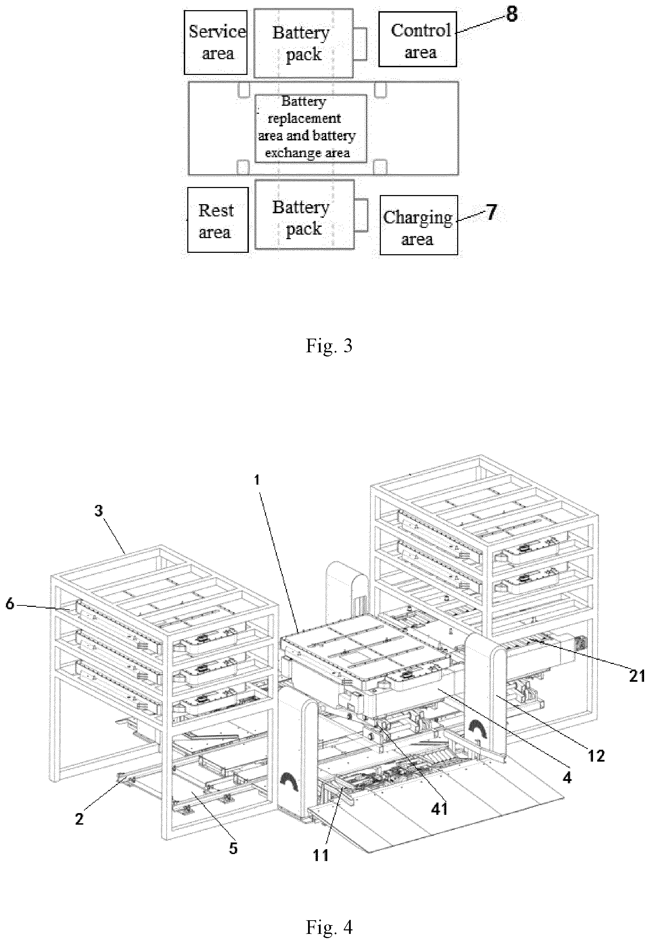

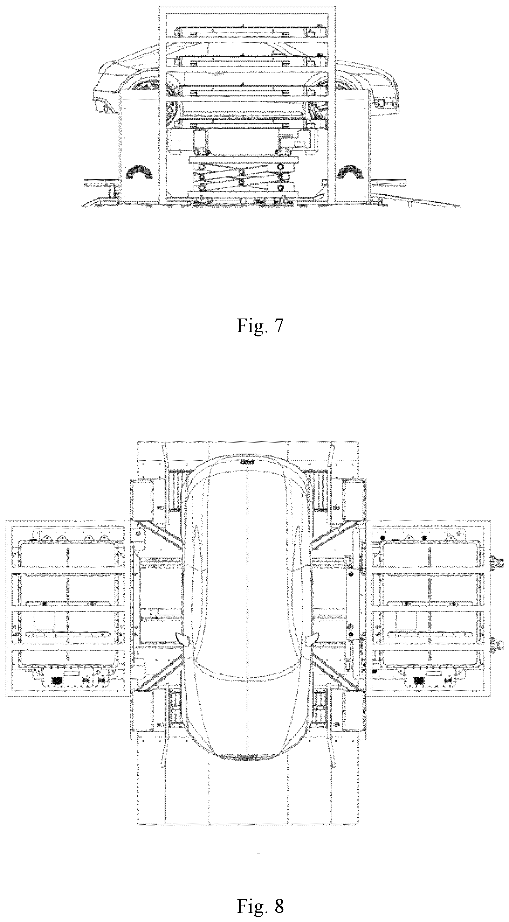

As shown in Fig. 3 to Fig. 8, the embodiment of the present invention provides an automatic battery swap station of an electric vehicle, including: a battery replacement platform 1, a guide rail 2, battery pack storage devices 3 and a battery replacement trolley 4. The battery replacement platform 1 is used for supporting and locating the vehicle and lifting the vehicle to a preset battery replacement height. The guide rail 2 passes through the battery replacement platform 1 and extends out from the battery replacement platform 1 at both ends, and the guide rail 2 is used as a walking track of the battery replacement trolley 4. The battery pack storage devices 3 are arranged at the both ends of the battery replacement platform 1 where the guide rail 2 extends out respectively, and are used for storing battery packs, receiving power-lost battery packs conveyed by the battery replacement trolley 4 and providing fully-charged battery packs for the battery replacement trolley 4, the battery pack storage device 3 is provided with an avoidance area 5 at the bottom for enabling the guide rail 2 and the battery replacement trolley 4 to enter and is provided with multiple layers of battery pack storage units 6 arranged along a height direction on the avoidance area 5. It can be understood that the height direction is a direction perpendicular to the ground.

It should be noted that the battery packs in the present invention include a power-lost battery pack and a fully-charged battery pack. The power-lost battery pack refers to a battery pack detached from the vehicle in a battery replacement process, and it is not limited that the battery pack detached from the vehicle is in a complete power-lost state. Similarly, the fully-charged battery pack refers to a battery pack installed on the vehicle in the battery replacement process, and it is not limited that the battery pack installed in the vehicle is in a complete fully-charged state.

The electric vehicle in the present invention generally refers to a vehicle with a replaceable battery pack, and is not limited to pure electric vehicles, but can also be hybrid vehicles.

Various components of the automatic battery swap station are respectively described in detail below:

### (1) Battery replacement platform

As shown in Fig. 4, as an example, the battery replacement platform 1 includes a platform main body 11 and a lifting mechanism 12, wherein the platform main body 11 is used for supporting and locating the vehicle; and the lifting mechanism 12 is arranged on the platform main body 11 for lifting the vehicle to the height required for battery replacement with the battery replacement trolley 4, and the required height can be set according to factors such as the type of vehicle to be replaced. It should be understood that when the vehicle enters and exits the battery replacement platform 1, the battery replacement trolley 4 should avoid.

### (2) Battery pack storage device

The battery pack storage device 3 is provided with the avoidance area 5 located at the bottom for enabling the guide rail 2 and the battery replacement trolley 4 to enter, the avoidance area 5 is arranged directly below the battery pack storage device 3, when the drives into the battery replacement platform 1, the battery replacement trolley 4 can be placed in the avoidance area for avoidance, so no additional avoidance area needs to be set for the battery replacement trolley 4, in this way, the space is fully saved, and the layout is more compact and reasonable.

In the example shown in Fig. 4, the height of the avoidance area 5 is configured to enable the battery replacement trolley 4 to maintain a height required for battery exchange with the vehicle in the avoidance area 5, so that when the battery replacement trolley 4 performs battery replacement with the vehicle, the battery replacement trolley 7 only translates along the guide rail 2 without ascending or descending, thereby improving the battery replacement efficiency. However, it can be understood that the avoidance area 5 can also be set to be lower than the height required for battery exchange with the vehicle, but after the battery replacement trolley 4 exits from the avoidance area 5, it needs to ascends to the height required for battery exchange with the vehicle, when the battery replacement trolley 4 needs to enter the avoidance area 5, it descends to a height lower than the avoidance area 5.

The avoidance area 5 is provided with multiple layers of battery pack storage units 6 arranged along the height direction. In order to increase the number of stored battery packs, not less than three layers of battery pack storage units 6 can be provided. Each layer of battery pack storage units 6 at least can store one battery pack. As shown in Fig. 4, as an example, the battery pack storage device 3 includes three layers of battery pack storage units 6, and each layer of battery pack storage units 6 can store one battery pack. Due to this space setting, the battery pack storage device 3 is located at a position corresponding to the central area of the battery replacement platform 1 along the direction of entry and exit of the vehicle, and vacant areas at both ends are provided with equipment areas, rest areas or service areas, as shown in Fig. 3, users can wait in the rest areas or the service areas during battery replacement, thereby improving the user experience.

However, it can be understood that the number of layers of the battery pack storage units 6 of the battery pack storage device 3 and the number of battery packs that can be accommodated in each layer of battery pack storage units 6 can be adaptively adjusted according to specific user needs, space requirements, and other factors. The battery pack storage device 3 adopts a multilayer structure, which can not only increase the number of stored battery packs, but also saves the floor space of the automatic battery swap station.

When the vehicle drives into the battery replacement platform 1, in the battery pack storage devices 3 at both ends of the guide rail 2, at least one battery pack storage unit 6 is in an idle state, that is, no battery pack is placed, for receiving a power-lost battery pack.

As an embodiment, the battery swap station can be provided with two battery replacement trolleys 4 on the guide rail 2 at the same time. During the battery replacement, one battery replacement trolley 4 is in the idle state for removing the power-lost battery pack from the vehicle, and a fully-charged battery pack is placed on the other battery replacement trolley 4 for providing the fully-charged battery pack for the vehicle.

Specifically, during the battery replacement, the two battery replacement trolleys 4 are respectively parked in the avoidance areas 5 on both sides of the battery replacement platform 1. After the vehicle drives into the battery replacement platform 1 and is lift by the lifting mechanism 12 to the height required for battery replacement with the battery replacement trolley 4, the battery replacement trolley 4 in the idle state drives into the bottom of the vehicle from the avoidance area 5 along the guide rail 2 to remove the power-lost battery pack from the vehicle, and returns to the corresponding avoidance area 5 along the guide rail 2 again. At the same time, the battery replacement trolley 4 on which the fully-charged battery pack is placed drives into the bottom of the vehicle from the avoidance area 5 along the guide rail 2 to install the fully-charged battery pack on the vehicle, and then returns to the corresponding avoidance area 5 along the guide rail 2. The lifting mechanism 12 lowers the vehicle on the platform main body 11, and the vehicle drives out from the battery replacement platform 1 to complete the battery replacement process of the vehicle.

During a battery replacement interval or an idle time, the battery replacement trolley 4 can walk onto the battery replacement platform 1 and reach the height corresponding to the battery pack storage unit 6 by ascending and descending to exchange the battery pack therewith. The battery replacement interval refers to a time after the battery replacement of the vehicle is completed, the vehicle drives out from the battery replacement platform 1, and no other vehicle enters the battery replacement platform 1. In the battery replacement interval, the battery replacement trolley 4 carrying the power-lost battery pack conveys the power-lost battery pack to the idle battery pack storage unit 6, and can also obtain the fully-charged battery pack from the battery pack storage unit 6 on which the fully-charged battery pack is placed for use in the next battery replacement process at the same time. The two battery replacement trolleys 4 can complete the above operations, no matter which battery replacement trolley 4 is selected to convey the battery pack, it only needs to meet the requirement that the battery replacement trolley 4 at one end of the guide rail 2 is placed in the idle state and the battery replacement trolley 4 at the other end of the guide rail 2 carries the fully-charged battery pack in the battery replacement process of the vehicle, and as long as at least one battery pack storage unit 6 is in an idle state. It can be seen that, in the automatic battery swap station, the area where the battery replacement platform 1 is located is not only used as a battery replacement area for replacing the battery pack of the vehicle, but also is used as an exchange area of the power-lost battery pack and the fully-charged battery pack, so that the occupied space is fully saved.

In the example shown in Fig. 4, the height of the avoidance area 5 can be set such that when the battery replacement trolley 4 stays in the avoidance area 5, it can maintain the height required for battery replacement. Therefore, in the battery replacement process of the vehicle, the battery replacement trolleys 4 do not need to ascend or descend, the battery replacement trolleys 4 on both sides cooperate with each other, and only need to move in parallel along the guide rail 2, therefore, the process is simple, and the battery replacement time is shortened.

In some other embodiments, only one battery replacement trolley 4 can also be provided, in this case, during battery replacement, other equipment needs to be equipped to change the battery pack between the battery replacement trolley 4 and the battery pack storage unit 6. Or, the guide rail 2 can be extended, so that it extends out from the battery pack storage device 3, in this way, the battery replacement trolley 4 can walk to the side of the battery pack storage device 3 opposite to the battery replacement platform 1, and then ascends and descends to the height of the battery pack storage unit 6 to exchange the battery pack.

It should be noted that Fig. 4 is only an example, the structures of the battery pack storage devices 3 at the both ends of the guide rail 2 are exactly the same, and in practical applications, it is not limited to thereto, the number of layers of battery pack storage units 6 specifically contained in the battery pack storage devices 3 at the both ends of the guide rail 2 can be set according to specific needs.

In order to reduce the frictional force of the battery pack with the battery replacement trolley 4 and the battery pack storage unit 6 to conveniently convey the battery pack therebetween, conveying parts 21 extending along the extension direction of the guide rail 2 for conveying the battery pack is arranged on the battery replacement trolley 4 and the battery pack storage unit 6, in order to exchange the battery pack with the battery replacement trolley 4. The conveying part 21 can be a conveyor belt, an in-line roller seat, or the like.

### (3) Battery replacement trolley

The battery replacement trolley 4 further includes a lifting mechanism 41, which can drive the battery replacement trolley 4 to move up and down among the layers of battery pack storage units 6 along the height direction.

In one embodiment, the lifting mechanism 41 can ascend and descend between a lowest position and a first height along the lifting direction, and the first height is a first height at which the battery can be exchanged with the vehicle. This situation is particularly applicable when the height of the avoidance area 5 is relatively small, and the battery replacement trolley 4 cannot maintain the height required for battery replacement in the avoidance area 5. Of course, when the height of the avoidance area 5 is sufficient, this lifting mechanism 41 can still be applied.

In another embodiment, the lifting mechanism 41 can ascend and descend between the first height and a second height along the lifting direction, the first height is a first height at which the battery can be exchanged with the vehicle, and the second height is a second height at which the battery can be exchanged with the battery pack storage unit 6. This lifting mechanism is especially suitable for the situation in which the battery replacement trolley 4 needs to exchange the battery with the battery pack storage unit 6, so that the battery replacement trolley 4 can convey the power-lost battery pack to any layer of battery pack storage unit 6 and can also remove the fully-charged battery pack from any layer of battery pack storage unit 6. Of course, if other transfer mechanisms for transferring the battery pack between the battery replacement trolley 4 and the battery pack storage unit 6 are provided, then the upper limit of the ascending and descending height of the lifting mechanism 41 can be limited to the battery replacement height, thereby simplifying the structure and strength requirements.

### (4) Charging device and control device

In addition, the automatic battery swap station further includes a charging device 7 for charging the power-lost battery pack. The charging device 7 can be provided separately and can also be arranged in the battery storage device 3.

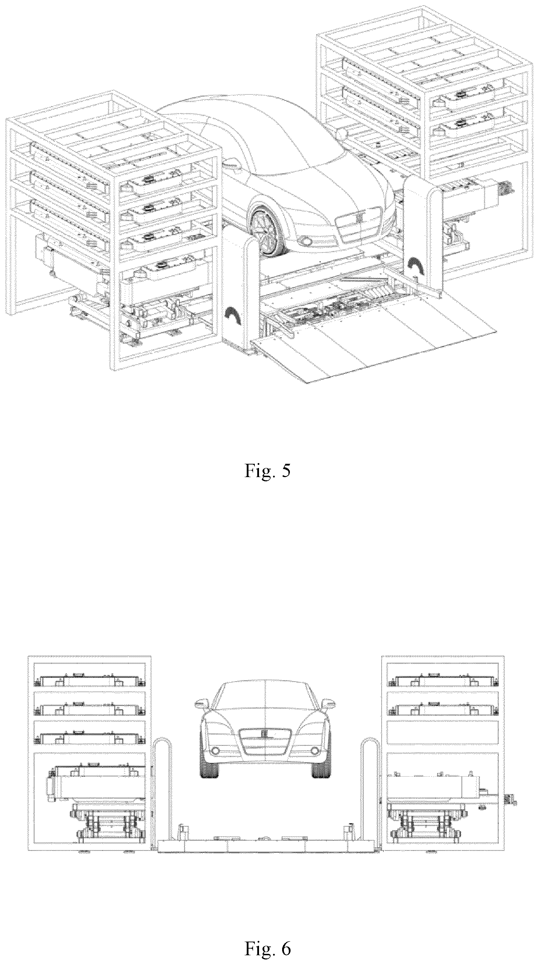

The automatic battery swap station further includes a control device 8 for sending instructions to the battery replacement platform 1, the battery replacement trolley 4 and the battery pack storage units 6 to coordinate and control the work of the components. The control device 8 can control various components of the battery swap station through wired, wireless or remote control modes. The control device 8 can also be separately arranged in the battery swap station or on the component parts of the battery swap station, for example, in the battery replacement platform 1, as shown in Fig. 5, as an example, the control device 8 can include an electrical control cabinet and a power distribution cabinet.

In the automatic battery swap station of the electric vehicle provided by the embodiment of the present invention, the orientation of the battery pack in the battery pack storage area is the same as that of the battery pack in the battery replacement area, so the battery pack does not need to be rotated in the battery replacement process, thereby shortening the battery replacement time and reducing the battery replacement space. The battery replacement trolley can be placed in the battery pack storage area, so no additional avoidance position of the battery replacement trolley needs to be set, thereby further saving the space; and the battery pack storage devices are arranged in layers, so multiple battery packs can be stored, and the number of stored battery packs is increased, and furthermore, the battery pack storage device has multiple battery exchange ports, so the flow is simple. By lifting and lowering the battery replacement trolley and adjusting the battery pack storage position in the battery pack storage device, a battery replacement area is used as a battery exchange area at the same time, thereby further saving the floor space and reducing the cost. By adopting the composition and layout of the battery swap station in the above examples, the automatic battery swap station can be controlled to occupy the area of three parking spaces at most, so that the layout is compact and reasonable. In addition, the battery swap station is suitable for the requirements of various parking lots and most vehicle repair stations, and can be widely used in various occasions; and all processes of automatic battery replacement can be completed automatically by the control device, and no manual battery replacement is needed, thereby saving manpower, ensuring a simple battery replacement process and easy operation, improving the battery replacement efficiency and improving the user experience.

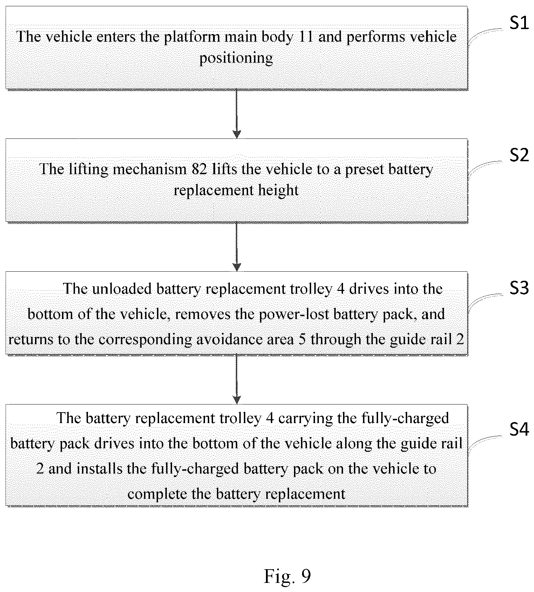

Based on the above automatic battery swap station, as shown in Fig. 9, taking two battery replacement trolleys 4 as an example, when automatic battery replacement is implemented, the operation method includes the following steps:
Step S1, the vehicle enters the platform main body 11 and performs vehicle positioning; and
   during the driving of the vehicle, the two battery replacement trolleys 4 at the both ends of the guide rail 2 are both placed in the avoidance area 5 for avoidance, wherein the battery replacement trolley 4 at one end of the guide rail 2 is in an idle state, and the battery replacement trolley 4 at the other end carries the fully-charged battery pack.
Step S2, the lifting mechanism 82 lifts the vehicle to a preset battery replacement height;
step S3, the unloaded battery replacement trolley 4 drives into the bottom of the vehicle, removes the power-lost battery pack, and returns to the corresponding avoidance area 5 through the guide rail 2; and
step S4, the battery replacement trolley 4 carrying the fully-charged battery pack drives into the bottom of the vehicle along the guide rail 2 and installs the fully-charged battery pack on the vehicle to complete the battery replacement.

After the battery replacement of the vehicle is completed, the two battery replacement trolleys 4 both return the corresponding avoidance areas 5, the lifting mechanism 12 lowers the vehicle onto the platform main body 11, and the vehicle drives out from the battery replacement platform 1. In the battery replacement interval, the battery replacement trolley 4 moves up and down along the height direction, aligns to the battery pack storage unit 6 and conveys the power-lost battery pack to the battery pack storage unit 6 in the idle state. Or, the battery replacement trolley obtains the fully-charged battery pack from the battery pack storage unit 6 carrying the fully-charged battery pack for use in the next battery replacement process.

All processes of the automatic battery replacement method in the present invention can be completed automatically by the control device, and no manual battery replacement is needed, thereby saving manpower, ensuring a simple battery replacement process and easy operation, improving the battery replacement efficiency and improving the user experience.

The above descriptions are only the preferred embodiments of the present invention, and do not limit the present invention in any form. Although the present invention has been disclosed in the preferred embodiments as above, the preferred embodiments are not used for limiting the present invention, anyone skilled familiar with this art can make some changes or modifications by using the technical contents disclosed above to serve as equivalent embodiments of equivalent changes, without departing from the scope of the technical solutions of the present invention, and any simple modifications, equivalent changes and modifications made to the above embodiments according to the technical essence of the present invention, without departing from the contents of the technical solutions of the present invention, still fall within the scope of the technical solutions of the present invention.

## Claims

1. An automatic battery swap station of an electric vehicle, comprising:
a battery replacement platform for supporting and locating the vehicle and lifting the vehicle to a preset battery replacement height;
a guide rail passing through the battery replacement platform and extending out from the battery replacement platform at both ends, wherein the guide rail is used as a walking track of a battery replacement trolley; and
battery pack storage devices, arranged at the both ends of the battery replacement platform where the guide rail extends out respectively, and used for storing battery packs, receiving power-lost battery packs conveyed by the battery replacement trolley and providing fully-charged battery packs for the battery replacement trolley, wherein the battery pack storage device is provided with an avoidance area at the bottom for enabling the guide rail and the battery replacement trolley to enter and is provided with multiple layers of battery pack storage units arranged along a height direction on the avoidance area.

2. The automatic battery swap station of the electric vehicle according to claim 1, wherein:
the height of the avoidance area is configured to enable the battery replacement trolley to maintain a height required for battery exchange with the vehicle in the avoidance area.

3. The automatic battery swap station of the electric vehicle according to claim 2, wherein:
two battery replacement trolleys are provided, wherein one is used for receiving the power-lost battery pack removed from the vehicle, and other is used for providing the fully-charged battery pack.

4. The automatic battery swap station of the electric vehicle according to claim 1, wherein:
the battery pack storage unit is provided with a conveying part, which is capable of conveying the battery pack along the extension direction of the guide rail and is used for exchanging the battery pack with the battery replacement trolley.

5. The automatic battery swap station of the electric vehicle according to claim 1, wherein:
not less than three layers of battery pack storage units are arranged on the battery pack storage device.

6. The automatic battery swap station of the electric vehicle according to claim 3, wherein:
the battery replacement trolley comprises a lifting mechanism for driving the battery replacement trolley to ascend and descend along the height direction.

7. The automatic battery swap station of the electric vehicle according to claim 6, wherein:
the lifting mechanism can ascend and descend between a lowest position and a first height along the lifting direction, and the first height is a first height at which the battery can be exchanged with the vehicle.

8. The automatic battery swap station of the electric vehicle according to claim 6, wherein:
the lifting mechanism can ascend and descend between the first height and a second height along the lifting direction, the first height is a first height at which the battery can be exchanged with the vehicle, and the second height is a second height at which the battery can be exchanged with the battery pack storage unit.

9. The automatic battery swap station of the electric vehicle according to claim 6, wherein:
the battery replacement platform comprises a platform main body and a lifting mechanism, wherein the platform main body is used for supporting and locating the vehicle; and the lifting mechanism is arranged on the platform main body for lifting the vehicle to the height required for battery replacement with the battery replacement trolley.

10. The automatic battery swap station of the electric vehicle according to claim 1, wherein:
the automatic battery swap station further comprises a charging device for charging the power-lost battery pack.

11. The automatic battery swap station of the electric vehicle according to any one of claims 1-10, wherein:
the automatic battery swap station further comprises a control device for sending instructions to the battery replacement platform, the battery replacement trolley and the battery pack storage units to coordinate and control the work of the components.
